# EUROPEAN PATENT SPECIFICATION

(11) **EP 0 303 630 B1**
(45) Date of publication and mention of the grant of the patent: **04.08.1993**
(21) Application number: 88900737.3
(22) Date of filing: 14.12.1987
(51) Int. Cl.: G02F 1/03, G02F 1/13, G01J 9/02

(54) **VARIABLE PHASE STOP FOR USE IN INTERFEROMETERS**
VERÄNDERBARE PHASENBLENDE ZUR VERWENDUNG IN INTERFEROMETERN
DISPOSITIF D'ARRET A PHASE VARIABLE UTILISE DANS DES INTERFEROMETRES

(30) Priority: 13.02.1987 US 14413
(43) Date of publication of application: 22.02.1989
(73) Proprietor: Hughes Aircraft Company, Los Angeles, California 90045-0066 (US)
(72) Inventor: PEPPER, David, M., Malibu, CA 90265 (US); O'MEARA, Thomas, Malibu, CA 90265 (US)
(74) Representative: KUHNEN, WACKER & PARTNER
(86) International application number: US8703295
(87) International publication number: WO8806302

(56) References cited:
- US-A- 3 402 001
- US-A- 4 333 720
- PATENT ABSTRACTS OF JAPAN, vol. 8, no. 27 (P-252)(1464), 4 February 1984, & JP-A-58184115 (NIHON KOUGAKU KOGYO K.K.), 27 October 1983.
- IBM TECHNICAL DISCLOSURE BULLETIN, vol. 27, no. 10B, March 1985, (New York, US), "Thin film camera iris using liquid crystalline materials", pages 6166-6167.
- PATENT ABSTRACTS OF JAPAN, vol. 5, no. 191 (P-92)(863), 5 December 1981, & JP-A-56114923 (WEST DENKI K.K.), 9 September 1981.
- OPTICS LETTERS, vol. 9, no. 2, February 1984, Optical Society of America, (New York, US), O.Y. Kwon : "Multichannel phase-shifted interferometer", pages 59-61.
- PATENT ABSTRACTS OF JAPAN, vol. 8, no. 223 (P-307)(1660), 12 October 1984, & JP-A-59105613 (MITSUBISHI DENKI K.K:), 19 June 1984.

## Description

### 1. Technical Field

This invention relates to interferometers and, more particularly, to phase stops for altering the phase of light passing therethrough.

### 2. Background

Phase stops are used in interferometers to modify the phase of a portion of a light beam passing therethrough. These phase stops are often used in common-path interferometers such as the Zernike phase contrast microscope. Among the advantages of common-path interferometers over separate-path interferometers is that the former tend to be more rugged and less susceptible to environmental perturbations due to mechanical, thermal and other similar forces as well as being less susceptible to aberrations caused by the additional optical components required by the separate-path interferometers. The use of a variable diameter dynamic amplitude pin hole design for use in separate-path interferometers has been suggested for the purpose of increasing fringe visibility. Although this arrangement is useful, it is relatively inefficient since the light of interest is diminished due to photon loss in the beam splitters in the system and the amplitude-stop nature of the pin hole design.

The known common-path interferometers also have their drawbacks. Since they generally use fixed-diameter phase stops, the known systems can only be optimized for a limited range of low to high spatial frequency content in the wavefront. Accordingly, fringe visibility will not be very good if it is desired to use the interferometer to analyze a different class of phase objects than the phase object for which the fixed phase stop was selected, or phase objects that vary in time.

US-A-4 333 720 discloses a stop control device using a physical property member which is arranged to have its light transmission factor variable and to form a light shielding part and a light transmitting part for effecting adjustment of an aperture value by adjusting the area of the light transmitting part. The area of the light transmitting part for each stopping step of the aperture is determined in relation to the light shielding part and the light transmission factor of the light transmitting part to obtain a effective T number. This stop device is a variable amplitude stop where portions of the light are actually blocked from passing through the stop by the polarizing plate.

In view of the foregoing, it is an object of the present invention to provide a dynamically variable phase stop whose characteristics can be electrically controlled, and its use in common-path interferometers to provide an adaptive system that can optimize fringe visibility for a wide class of objects of interest.

This object is achieved by the features of Claim 1 and Claim 8, respectively.

According to the present invention, a phase stop is provided by way of an electro-optical device through which a light beam of interest is directed. Means are provided on the electro-optical material to shift the phase of a portion of light with respect to the remainder of the beam passing through the device. In the preferred embodiment, a plurality of concentric transparent electrodes on one face of the device are used to define the aperture size of the phase stop. The present invention finds particular utility in a common-path interferometer having a feed back loop designed to selectively energize a given electrode or a set of electrodes to optimize the fringe visibility of the object being analyzed.

### BRIEF DESCRIPTION OF THE DRAWINGS

The various advantages of the present invention will become apparent to one skilled in the art upon reading the following specification and by reference to the drawings in which:
FIG. 1 is a side view of an electro-optical device made in accordance with one embodiment of this invention;
FIG. 2 is a front view of the embodiment of FIG. 1;
FIGS. 3(A-B) are graphs illustrating the relationship between voltage applied to the electrodes and the radius of the aperture in the device;
FIG. 4 is a schematic view illustrating the orientation of liquid crystals in the device of FIG. 1 with a uniform electric field applied;
FIG. 5 is a view similar to FIG. 4 with an electric field applied to some of the innermost electrodes;
FIG. 6 is a side view of a second embodiment of a device made in accordance with this invention;
FIG. 7 is a front view of the device shown in FIG. 6;
FIG. 8 is a side view of a third embodiment;
FIG. 9 is a front view of the FIG. 8 embodiment;
FIG. 10 is a side view of a fourth embodiment; and
FIG. 11 is a schematic view illustrating an interferometer in which the electro-optical device of the present invention find particular utility.

### DESCRIPTION OF THE PREFERRED EMBODIMENTS

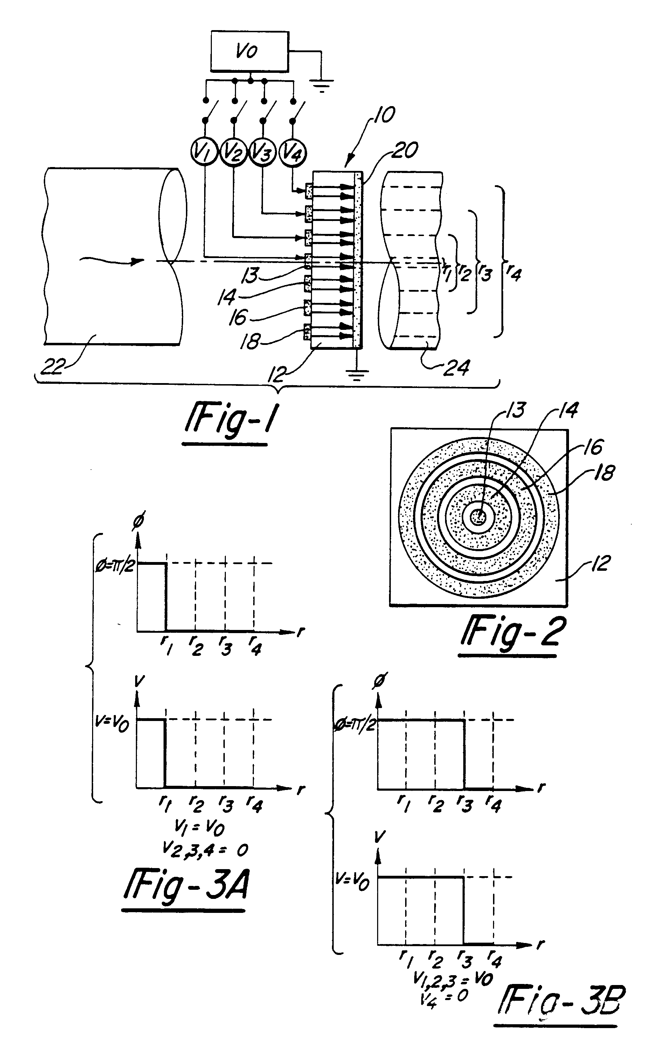

With reference to FIGS. 1-5, the phase stop 10 is constructed of suitable electro-optical or other controllable optical material whose optical path difference or phase shift characteristics vary depending upon the nature of an applied electrical field or other controlling forces. Generally, the electro-optical material should possess good birefringent characteristics and be transparent. Suitable electro-optical mediums include lithium niobium trioxide, liquid crystal and the like, with liquid crystal being presently preferred. As a result, the present invention will be described without limitation in connection with the phase stop 10 taking the form of a liquid crystal film or cell 12. The front surface of cell 12 includes a plurality of concentric transparent ring electrodes 13, 14, 16 and 18. The rear surface of liquid crystal cell 12 has a generally continuous transparent electrode 20 covering it. Means are provided for selectively applying electrical voltage to each of the ring electrodes. In FIG. 1, this is simplistically represented by the lines labeled V₁, V₂, V₃ and V₄ which can be selectively connected to a potential source V_{O} through a series of switches. The rear electrode 20 is connected to ground.

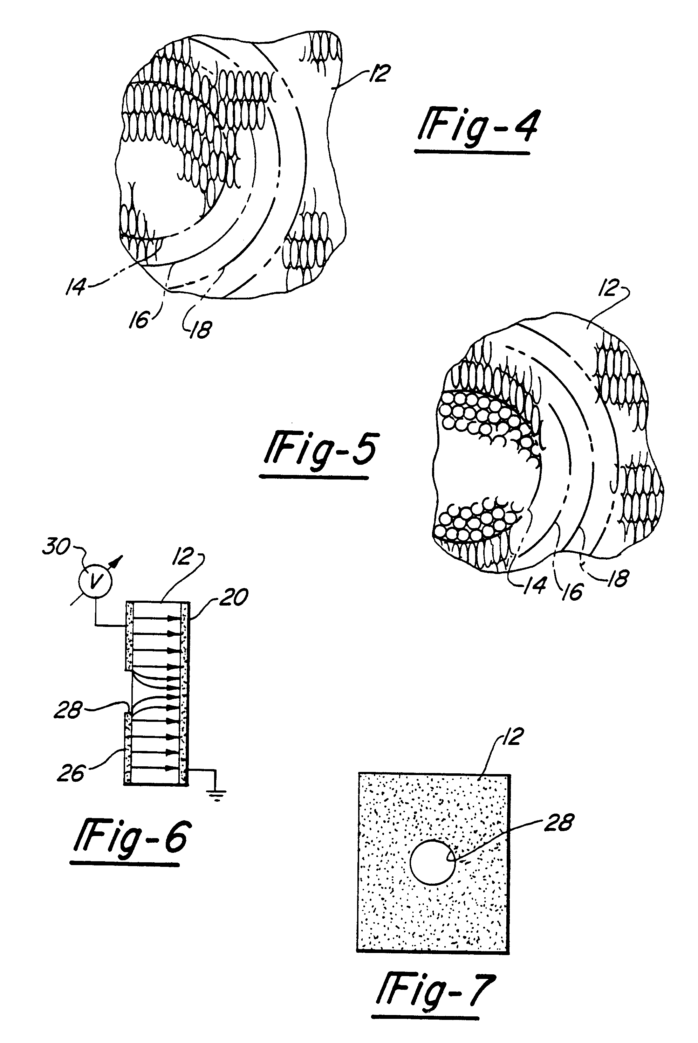

FIG. 4 schematically represents the orientation of the liquid crystals within cell 12 when no electric field is applied across the two major faces thereof. Essentially all of the liquid crystal molecules are aligned in one direction. As a result, an incoming light beam (represented in FIG. 1 by the numeral 22) is modified uniformly as it passes through the phase stop 10 so that the exit beam 24 also has generally uniform characteristics throughout its cross section. However, when an electric field is applied to one or more of the electrodes 13, 14, 16 or 18, the orientation of the liquid crystals change thereby creating a shift in the phase of the light passing through these "reoriented" crystals. In FIG. 5, the liquid crystals are shown reoriented essentially 90 degrees from their original orientation due to an influence of an electric field applied to electrodes 13 and 14. In FIGS. 4 and 5 the influence of an electric field if applied to the other electrodes are shown in dotted lines. The physical characteristics of the liquid crystal cell (liquid crystal cell type thickness, etc.) are preferably chosen so that a phase shift of approximately 90 degrees in the light passing through the reoriented crystals results. The amount of voltage V₁, V₂, V₃ and V₄ is also chosen to create a sufficiently strong electric field so as to "saturate" the liquid crystal molecules so as to reorient them to the same position each time an electric field is applied. In such manner, an optimal 90 degree phase shift with respect to the outer portion of the beam that does not pass through the reoriented crystals will result.

With additional reference to FIG. 3 it can be seen that the aperture or "iris" of the phase stop 12 is determined by which electrode(s) are energized. For example, if electrode 13 is energized then the smaller inner core r₁ will be phase shifted as illustrated in FIG. 3(A). On the other hand, if the electrodes 16, 14 and 13 are energized then the larger core r₃ of the exit beam 24 will be phase shifted 90 degrees with respect to the outer portion of the beam that passes through the nonaffected outer portions of the transparent liquid crystal cell 12.

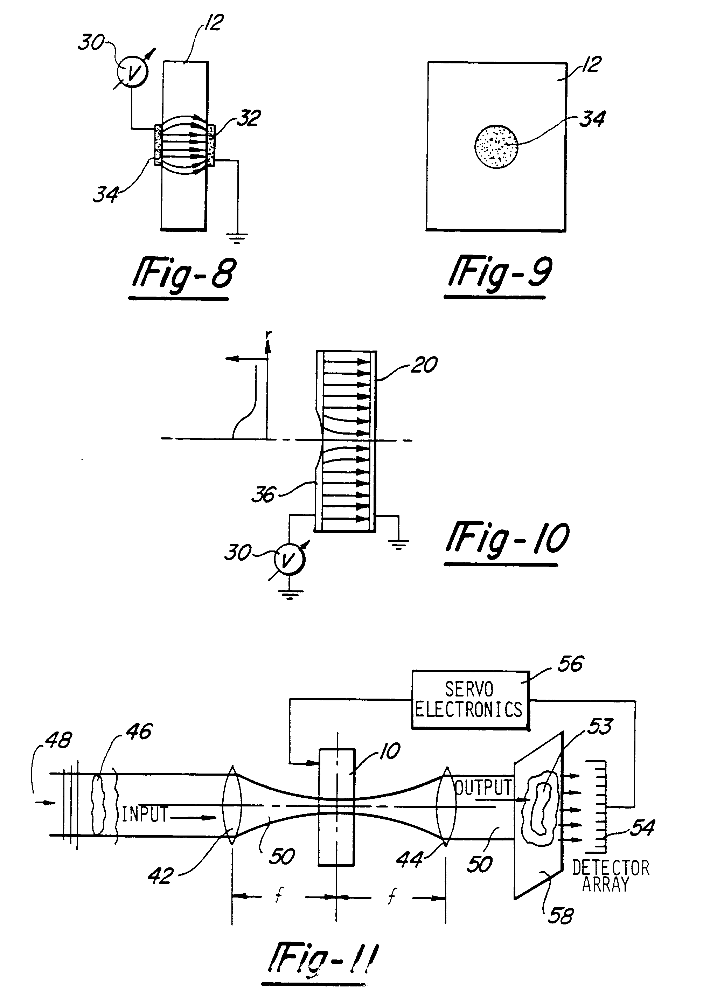

While the embodiment shown in FIGS. 1-2 is presently preferred because of its capability of providing a simply implemented stepwise radial phase variation, other constructions can be used that fall within the broad concept of the present invention. For example, the embodiments shown in FIGS. 6-9 reflect a second basic approach to radial spatial control but these designs only require a single applied control voltage. Common reference numerals are used to represent common elements previously discussed in connection with the earlier embodiment. In the embodiment shown in FIGS. 6-7, the front electrode 26 has a circular hole 28 formed therein such as by the use of suitable photolithographic etching techniques. In the embodiment shown in FIGS. 8-9 there is provided basically a "reverse contrast" electrode pattern employing two smaller concentrically aligned disc shaped electrodes 32 and 34. In both embodiments, a single applied voltage 30 across the cell 12 yields a smoothly varying, radially-dependent electric field distribution (represented by the arrows in the drawings). The electric field is axially symmetrical about the cell but has local minimum or maximum field strength in certain areas along the axis depending upon the electrode geometry. The FIG. 6-7 embodiment provides a radially increasing fringe-field configuration whereas the FIG. 8-9 embodiment provides a radially decreasing fringe-field configuration. In either embodiment, these constructions result in a radially varying liquid crystal tilt distribution and therefore a concomitant radial phase distribution.

In the limit of large voltages, the liquid crystal molecules will be rotated through 90 degrees in the central region, with parameters set so that the maximum phase shift of the light beam is π/2. Hence, the effective "radius" of the phase stop is determined by the fringe field regions, where the optical induced phase shift dropped from π/2 to 0 degrees. Hence, a phase step of π/2 with a radially varying taper results.

FIG. 10 illustrates still another embodiment where the electro-optical cell is provided with a continuous rear electrode of substantially uniform thickness while the resistance of the forward electrode 36 varies radially. This is illustrated in an exaggerated manner in the drawing. The "tapered" resistance can be provided, for example, by known vapor deposition techniques. The variable resistance of electrode 36, in turn, varies the electric field applied throughout the electro-optical member 30. Accordingly, the phase shift of the exit beam 32 is likewise affected in a radially varying manner. This approach enables one to have good control over the "radius" and magnitude of the phase stop. Still other approaches can be used such as a hybrid scheme employing both the concentric electrode design of the FIG. 1-4 embodiment together with the fringing-field concept described in connection with the other embodiments.

FIG. 11 illustrates a common path interferometer 40 in which the phase stop devices of the present invention find particular utility. The particular interferometer 40 shown in FIG. 11 is a Zernike phase-contrast microscope that has been modified to take advantage of the dynamically variable capabilities of the electro-optical device of the present invention. In this particular embodiment, the phase stop device 10 of the FIG. 1 embodiment is placed at the common focal plane of a two-lens system employing lenses 42 and 44. The object 46 to be analyzed is illuminated advantageously by white-light (i.e., broad band) represented by a source labeled 48. Device 10 is used to shift the phase of a portion of the input beam 50 so that the output beam 52 as collimated by lens 44 generates an interference pattern 53 or white-light fringes of the object 46 at an output plane. A detector array 54 cooperates with suitable servo-electronics 56 to optimize the fringe visibility of the interference pattern generated at the output plane 58. The fringe visibility is optimized by adjusting the radius of the aperture or "iris" of the electro-optical device 10 by applying voltage to one or more of the concentric electrodes. Hence, for small DC (spatial frequency) amplitudes of the incoming light, the radius of the device 10 can be increased by generating the appropriate voltage levels on more than one of the concentric electrodes to thereby increase the amount of light that is phase shifted by the reoriented liquid crystals. As known in the art, the fringe visibility is optimized by matching the amount of phase-shifted light with the nonphase-shifted light.

Through the use of suitable servo techniques, the phase stop radius of device 10 can be updated to accommodate time-varying phase objects. In this fashion, an effective "fringe contrast" automatic gain control is realized with respect to a given interference pattern. Since the AC and DC spatial components essentially propagate along a common path, the interferometer 40 is essentially self-referencing and can resolve white-light illuminated objects. Moreover, the interferometer is more rugged than and, hence, less susceptible to problems associated with "separate-path" interferometers.

## Claims

1. A phase stop device (10) for shifting the phase of a light beam (22) within a selected portion of the cross section of the beam when said beam is passing through the device, said device comprising:
an electro-optical member (12) having two major opposed surfaces;
transparent electrode means on each major surface, the electrode means on one of the major surfaces comprising one or more electrodes (13, 14, 16, 18) arranged in a predetermined pattern;
voltage applying means (V) arranged to apply to selected ones of said electrodes a predetermined voltage to generate an electric field across the elecro-optic member limited to said portion,
thereby phase shifting the light within said portion with respect to the remaining light beam passing through the device.

2. The device (10) of Claim 1 wherein said electrode means comprises:
a generally continuous electrode (20) covering one surface; and
a plurality of concentric ring electrodes (13,14,16,18) on the other surface.

3. The device (10) of Claim 2 which further comprises voltage means for selectively applying a given voltage to said electrodes (13,14,16,18).

4. The device (10) of Claim 1 wherein said electrode means comprises:
a first electrode (20) covering one surface of the electro-optical member; and
a second electrode (26) covering the other surface except for an opening centrally located therein.

5. The device (10) of Claim 1 wherein said electrode means comprises two disc-shaped electrodes (32,34) concentrically located in the middle of the major surfaces, said electrodes being small compared to the dimension of the respective major surface on which each electrode is located.

6. The device (10) of Claim 1 wherein said electrode means comprises:
a first continuous electrode (20) of substantially uniform thickness covering one surface of the electro-optical member; and
a second electrode (36) on the other surface having an electrical resistance which varies radially to thereby affect electric field distribution throughout the electro-optical member.

7. The device (10) of at least one of the Claims 1 through 6 wherein the electrco-optical member comprises liquid crystal material (12) whose characteristics are chosen to cause a phase shift of the light beam (22) of about 90 degrees in response to the application of voltage.

8. A common-path interferometer (40) comprising: the phase stop device (10) of at least one of the Claims 1 through 7 and further comprising:
a light source creating an input beam (48) for illuminating an object (46) to be analysed;
a detector array (54) for detecting interference patterns (53) associated with the object (46) and providing an output associated with fringe visibility;
said phase stop device (10) positioned between the object (46) and the detector array (54); and
servo means (56) connected between the detector array (54) and said phase stop device (10), said servo means (56) being adapted to apply electrical voltage to said phase stop device (10) to optimize fringe visibility by dynamically altering the amount of light which is phase shifted with respect to that portion of the light in the input beam (50) passing through said phase stop device (10), which is not shifted in phase.

9. The interferometer (40) of Claim 8 wherein the input beam (48) is white light.

## Patentansprüche

1. Phasenstopvorrichtung (10) zum Verschieben der Phase eines Lichtstrahles (22) innerhalb eines vorbestimmten Abschnittes des Querschnittes des Strahles beim Durchgang des Strahles durch die Vorrichtung, wobei die Vorrichtung aufweist:
einen elektro-optischen Teil (12) mit zwei gegenüberliegenden Hauptoberflächen;
auf jeder Hauptoberfläche eine transparente Elektrodenvorrichtung, wobei die Elektrodenvorrichtung auf einer der Hauptoberflächen eine oder mehrere Elektroden (13, 14, 16, 18) aufweist, die in einer vorbestimmten Struktur angeordnet sind;
eine Spannungsanlegevorrichtung (V), welche zum Anlegen einer vorbestimmten Spannung an ausgewählte Elektroden angeordnet ist, um ein elektrisches Feld über den elektro-optischen Teil zu erzeugen, welches auf den genannten Abschnitt begrenzt ist,
wodurch eine Phasenverschiebung des Lichtes innerhalb des Abschnittes bezüglich des verbleibenden Lichtstrahles, welches durch die Vorrichtung hindurchgeht, bewirkt wird.

2. Vorrichtung (10) nach Anspruch 1, wobei die Elektrodenvorrichtung aufweist:
eine im wesentlichen kontinuierliche Elektrode (20), welche eine Oberfläche bedeckt; und
eine Vielzahl von konzentrischen Ringelektroden (13, 14, 16, 18) auf der anderen Oberfläche.

3. Vorrichtung (10) nach Anspruch 2, welche des weiteren eine Spannungsvorrichtung zum selektiven Anlegen einer bestimmten Spannung an die Elektroden (13, 14, 16, 18) aufweist.

4. Vorrichtung (10) nach Anspruch 1, wobei die Elektrodenvorrichtung aufweist:
eine erste Elektrode (20), welche eine Oberfläche des elektro-optischen Teiles bedeckt; und
eine zweite Elektrode (26), welche die andere Oberfläche mit Ausnahme einer darin zentral gebildeten Öffnung bedeckt.

5. Vorrichtung (10) nach Anspruch 1, wobei die Elektrodenvorrichtung zwei scheibenförmige Elektroden (32, 34) aufweist, die in der Mitte der Hauptoberflächen konzentrisch angeordnet sind, wobei die Elektroden im Vergleich zur Abmessung der jeweiligen Hauptoberfläche, auf der jede Elektrode angeordnet ist, klein ist.

6. Vorrichtung (10) nach Anspruch 1, wobei die Elektrodenvorrichtung aufweist:
eine erste kontinuierliche Elektrode (20) mit einer im wesentlichen gleichförmigen Dicke, die eine Oberfläche des elektro-optischen Teiles bedeckt; und
eine zweite Elektrode (36) auf der anderen Oberfläche mit einem elektrischen Widerstand, der radial variiert, um hierdurch eine elektrische Felderteilung über den elektro-optischen Teil zu bewirken.

7. Vorrichtung (10) nach zumindest einem der Ansprüche 1 bis 6, wobei der elektro-optische Teil ein Flüssigkristallmaterial (12) aufweist, dessen Charakteristiken derart gewählt sind, daß eine Phasenverschiebung des Lichtstrahls (22) von etwa 90 Grad in Antwort auf die Anlegung der Spannung bewirkt wird.

8. Interferometer mit einem gemeinsamen Pfad aufweisend eine Phasenstopvorrichtung (10) von zumindest einem der Ansprüche 1 bis 7, welches des weiteren aufweist:
eine Lichtquelle zur Erzeugung eines Eingangsstrahles (48) zur Beleuchtung eines zu analysierenden Objektes (46);
eine Detektoranordnung (54) zur Erfassung von Interferenzmustern (53) in Zusammenhang mit dem Objekt (46) und Liefern eines Ausganges in Zusammenhang mit der Sichtbarkeit der Interferenzmuster;
wobei die Phasenstopvorrichtung (10) zwischen dem Objekt (46) und der Detektoranordnung (54) angeordnet ist; und
eine Servovorrichtung (56), welche zwischen der Detektoranordnung (54) und der Phasenstopvorrichtung (10) verbunden ist, wobei die Servovorrichtung (56) zum Anlegen von elektrischer Spannung an die Phasenstopvorrichtung (10) angepaßt ist, um die Sichtbarkeit der Interferenzmuster durch dynamisches Ändern der Menge an Licht zu optimieren, welche bezüglich desjenigen Abschnittes des Lichtes in dem Eingangsstrahl (50) phasenverschoben ist, der durch die Phasenstopvorrichtung (10) hindurchgeht, welcher nicht phasenverschoben ist.

9. Interferometer (40) nach Anspruch 8, wobei der Eingangsstrahl (48) weißes Licht darstellt.

## Revendications

1. Un dispositif consistant en un diaphragme de phase (10), destiné à déphaser un faisceau de lumière (22) dans une partie sélectionnée de la section transversale du faisceau, lorsque ce faisceau traverse le dispositif, ce dispositif comprenant :
un élément électro-optique (12) ayant deux surfaces principales opposées;
une structure d'électrodes transparentes sur chaque surface principale, la structure d'électrodes sur l'une des surfaces principales comprenant une ou plusieurs électrodes (13, 14, 16, 18) disposées selon une configuration prédéterminée;
des moyens d'application de tension (V) conçus pour appliquer une tension prédéterminée à certaines électrodes sélectionnées, afin de générer dans l'élément électro-optique un champ électrique limité à la partie précitée, pour déphaser ainsi la lumière dans la partie précitée, par rapport au faisceau de lumière restant qui traverse le dispositif.

2. Le dispositif (10) de la revendication 1, dans lequel la structure d'électrodes comprend :
une électrode (20) qui est de façon générale continue et recouvre une surface; et
un ensemble d'électrodes annulaires concentriques (13, 14, 16, 18) sur l'autre surface.

3. Le dispositif (10) de la revendication 2, comprenant en outre des moyens d'application de tension pour appliquer sélectivement une tension donnée aux électrodes (13, 14, 16, 18).

4. Le dispositif (10) de la revendication 1, dans lequel la structure d'électrodes comprend :
une première électrode (20) recouvrant une surface de l'élément électro-optique; et
une seconde électrode (26) recouvrant l'autre surface sauf à l'emplacement d'une ouverture centrale dans cette électrode.

5. Le dispositif (10) de la revendication 1, dans lequel la structure d'électrodes comprend deux électrodes en forme de disque (32, 34) disposées de façon concentrique au milieu des surfaces principales, ces électrodes étant petites en comparaison avec la dimension de la surface principale respective sur laquelle chaque électrode est placée.

6. Le dispositif (10) de la revendication 1, dans lequel la structure d'électrodes comprend :
une première électrode continue (20) d'épaisseur pratiquement uniforme, recouvrant une surface de l'élément électro-optique; et
une seconde électrode (36) sur l'autre surface, ayant une résistance électrique qui varie en direction radiale, pour affecter ainsi la distribution du champ électrique dans l'ensemble de l'élément électro-optique.

7. Le dispositif (10) de l'une au moins des revendications 1 à 6, dans lequel l'élément électro-optique comprend une matière à cristal liquide (12) dont les caractéristiques sont choisies de façon à produire un déphasage du faisceau de lumière (22) d'environ 90 degrés sous l'effet de la tension appliquée.

8. Un interféromètre à chemin commun (40) comprenant le dispositif consistant en un diaphragme de phase (10) de l'une au moins des revendications 1 à 7, et comprenant en outre :
une source de lumière produisant un faisceau d'entrée (48) pour illuminer un objet (46) à analyser;
un réseau de détecteurs (54) pour détecter des figures d'interférences (53) qui sont associées à l'objet (46), et pour produire un signal de sortie associé à la visibilité de franges,
le dispositif consistant en un diaphragme de phase (10), placé entre l'objet (46) et le réseau de détecteurs (54); et
des moyens d'asservissement (56) connectés entre le réseau de détecteurs (54) et le dispositif consistant en un diaphragme de phase (10), ces moyens d'asservissement (56) étant conçus de façon à appliquer une tension électrique au dispositif consistant en un diaphragme de phase (10) pour optimiser la visibilité de franges, en modifiant de façon dynamique la quantité de lumière qui est déphasée, par rapport à la partie de la lumière dans le faisceau d'entrée (50) traversant le dispositif consistant en un diaphragme de phase (10), qui n'est pas déphasée.

9. L'interféromètre (40) de la revendication 8, dans lequel le faisceau d'entrée (48) consiste en lumière blanche.
